# EUROPEAN PATENT APPLICATION

(11) **EP 4 494 759 A1**
(43) Date of publication of application: **22.01.2025**
(21) Application number: 23770443.2
(22) Date of filing: 02.03.2023
(51) Int. Cl.: B01J 23/83, B01J 23/10, B01J 23/889, B01J 23/92, B01J 23/94, B01J 38/10, C01B 32/40, C01F 17/241, C01F 17/30

(54) **REDUCING AGENT, AND GAS PRODUCTION METHOD**

(30) Priority: 16.03.2022 JP 2022040903
(71) Applicant: SEKISUI CHEMICAL CO., LTD., Osaka-shi Osaka 530-8565 (JP)
(72) Inventor: IIJIMA, Keisuke, Tsukuba-shi, Ibaraki 300-4292 (JP); TAKIZAWA, Koji, Tsukuba-shi, Ibaraki 300-4292 (JP); HATA, Risa, Tsukuba-shi, Ibaraki 300-4292 (JP); YAGIHASHI, Noritoshi, Tsukuba-shi, Ibaraki 300-4292 (JP)
(74) Representative: Alpspitz IP
(86) International application number: PCT/JP2023/007872
(87) International publication number: WO 2023/176485

(57) **Abstract**

[Summary]

[Problem] To provide: a reducing agent with which it is possible to simplify or omit an operation for separating out valuable carbon, starting with late-stage carbon monoxide; and a gas production method in which such a reducing agent is used.

[Solution] According to the present invention, there is provided a reducing agent for reducing carbon dioxide through contact therewith to generate valuable carbon. The reducing agent contains an oxygen carrier provided with oxygen-ion transmission properties. The oxygen carrier includes cerium (Ce) as a primary metal element, and includes a metal element belonging to group 3 of the periodic table as an auxiliary metal element.

## Description

### BACKGROUND

The present disclosure relates to a reductant and a method for producing gas, and more specifically relates to a reductant that can be used for a chemical looping method, and a method for producing gas using the reductant.

### RELATED ART

In recent years, an atmospheric concentration of carbon dioxide, which is a kind of greenhouse gas, has been kept increased. The increase in concentration of carbon dioxide in the atmosphere promotes the global warming. Therefore, it is important to collect carbon dioxide which is released into the atmosphere, and if the collected carbon dioxide can be converted into a valuable material, which can be reused, the carbon cycle society can be realized.

Conventionally, as a conventional method for producing carbon monoxide from carbon dioxide, a method utilizing a reverse water-gas shift reaction has been known. However, this conventional reverse water-gas shift reaction has a problem in that, since carbon monoxide and water coexist as products in the system, a conversion efficiency of carbon dioxide into carbon monoxide is low due to the restriction of the chemical equilibrium.

Then, in order to solve the above problem, conversion (synthesis) from carbon dioxide into carbon monoxide is carried out using a chemical looping method. The chemical looping method described here is a method in which the reverse water-gas shift reaction is divided into two reactions: a reduction reaction by hydrogen; and a generation reaction of carbon monoxide from carbon dioxide, and these reactions are bridged with an oxygen carrier (for example, metal oxide: MOₓ) (see below formulae).

H₂ + MOₓ → H₂O + MOₓ₋₁

CO₂ + MOₓ₋₁ → CO + MOₓ

Incidentally, in the above formulae, MOₓ₋₁ indicates a state in which a part or all of the metal oxide has been reduced.

In the chemical looping method, since water and carbon monoxide, which are substrates of a reverse reaction, do not coexist in each of the reactions, the conversion efficiency from carbon dioxide into carbon monoxide may be higher than that of the chemical equilibrium of the reverse water-gas shift reaction.

As metal oxide for bridging the reaction in this chemical looping method, metal oxide that easily causes oxygen deficiency such as cerium oxide, and mixtures thereof are widely used (see Patent Document 1).

### PRIOR ART DOCUMENTS

### Patent document

[Patent Document 1] WO2020/175426

### SUMMARY

### Problems to be Solved by Invention

In Patent Document 1, performance of metal oxide is evaluated based on its oxygen storage and release capacity (OSC). According to this OSC, a conversion efficiency of carbon dioxide to carbon monoxide by metal oxide can be evaluated. According to the review of the present inventors, the conversion efficiency is actually important in the evaluation of metal oxide, but if considering to simplify or omit the separation operation of the carbon valuable substance such as carbon monoxide in a latter stage, a ratio of an amount of the carbon valuable substance to a total amount of carbon dioxide and the carbon valuable substance (the carbon valuable substance/ carbon dioxide and the carbon valuable substance) in gas after a predetermined period of time from when the reductant is brought in contact with carbon dioxide is also important.

In the light of the above-described problems, the present disclosure provides a reductant that can simplify or omit the separation operation of the carbon valuable substance such as carbon monoxide in the latter stage, and a gas production method using the reductant.

### Means for Solving Problems

According to an aspect of the present disclosure, a reductant that reduces carbon dioxide by contact and generates a carbon valuable substance is provided. This reductant includes an oxygen carrier having oxygen ion conductivity. The oxygen carrier includes cerium (Ce) as a primary metallic element and a metallic element belonging to the group III of the periodic table as a secondary metallic element.

According to the aspect, the reductant which can simplify or omit the separation operation of the carbon valuable substance such as carbon monoxide in the latter stage can be obtained.

### BRIEF DESCRIPTION OF DRAWINGS

FIG. 1 is a schematic view for explaining an aspect of carrying out a chemical looping reaction using a reductant of the present disclosure.
FIG. 2 is a schematic view for explaining an aspect of carrying out the chemical looping reaction using the reductant of the present disclosure.
FIG. 3 is a schematic view for explaining an aspect of carrying out the chemical looping reaction using the reductant of the present disclosure.

### DETAILED DESCRIPTION

Hereinafter, the reductant and the gas production method of the present disclosure will be described in detail by way of preferable embodiments.

### [Reductant]

The reductant of the present disclosure is used for producing product gas that includes carbon monoxide (carbon valuable substance), by reducing carbon dioxide by contact with source gas that includes carbon dioxide (that is, used in the gas production method of the present disclosure). Further, the reductant oxidized by the contact with carbon dioxide can be reduced (regenerated) by contact with reduction gas including hydrogen (reducing substance).

At this time, it is preferable that the source gas and the reduction gas alternately pass through a reaction tube (reaction vessel) filled with the reductant of the present disclosure, thereby converting carbon dioxide into carbon monoxide by the reductant and regenerating the oxidized reductant by the reduction gas.

The reductant of the present disclosure includes an oxygen carrier having oxygen ion conductivity.

Herein, the oxygen carrier is a compound that can generate reversible oxygen deficiencies, and oxygen elements become deficient from the oxygen carrier itself by reduction, but when the oxygen carrier with oxygen elements deficient (in a reduction state) is brought in contact with carbon dioxide, the oxygen carrier withdraws oxygen elements from the carbon dioxide, thereby exhibiting an reducing action.

The oxygen carrier in the present disclosure includes cerium (Ce) as a primary metallic element and a metallic element belonging to the group III of the periodic table as the secondary metallic element.

In the oxygen carrier, by solid-solving (doping) of the secondary metallic element in a crystal of the primary metallic element sufficiently, a crystal structure of cerium oxide (the oxygen carrier) can be distorted moderately. Thereby, it is considered that, since mobility of oxygen elements (oxygen ions) in the oxygen carrier can be increased, the oxygen carrier (reductant) can efficiently release oxygen elements by the contact with the reduction gas and induce oxygen deficiencies smoothly, whereby the oxygen carrier can easily withdraw oxygen elements from carbon dioxide due to these induced oxygen deficiencies, so that the conversion efficiency of carbon dioxide into carbon monoxide (hereinafter, simply referred to as the "conversion efficiency") is increased.

In addition, each of the elements belonging to the group III of the periodic table have electrons in a d-orbital and a f-orbital, and these electrons contribute to formation of bonds with oxygen. It is assumed that the existence of the electrons in such orbitals facilitates to remove oxygen from carbon dioxide, thereby increasing a ratio of an amount of carbon monoxide to a total amount of carbon dioxide and carbon monoxide (carbon monoxide/ carbon dioxide and carbon monoxide) in the gas after the contact with carbon dioxide.

Therefore, the oxygen carrier in the present disclosure can sufficiently increase the ratio of the amount of carbon monoxide to the total amount of carbon dioxide and carbon monoxide in the gas after the contact with carbon dioxide (hereinafter simply referred to as "conversion rate "). In addition, since the secondary metallic element is stably solid-solved in the oxygen carrier (cerium oxide), the conversion efficiency (oxygen capacity) of carbon dioxide into carbon monoxide is also high. Therefore, according to the present disclosure, the separation operation of carbon monoxide at the latter stage can be simplified or omitted.

In particular, by selecting a metallic element belonging to the group III as the secondary metallic element, a degree of the solid-solving and a degree of the distortion of the crystal structure of the secondary metallic element are likely to be moderate, whereby the above-described effect can be further improved.

A ratio of a molar amount of the primary metallic element (Ce) to a total molar amount of the metallic elements included in the oxygen carrier is preferably 0.3 or more and 0.95 or less, more preferably 0.4 or more and 0.95 or less, further preferably 0.5 or more and 0.9 or less, particularly preferably 0.55 or more and 0.9 or less, and most preferably 0.6 or more and 0.85 or less. As described above, by including the sufficient amount of Ce, which is the primary metallic element, the oxygen carrier can maintain the excellent oxygen ion conductivity of cerium oxide.

A ratio of the molar amount of the secondary metallic element to the molar amount of the primary metallic element (Ce) is preferably 0.01 or more and 0.99 or less, more preferably 0.1 or more and 0.5 or less, and further preferably 0.25 or more and 0.5 or less. By including the primary metallic element and the secondary metallic element in the above-described amount ratio (molar ratio), the conversion rate of the oxygen carrier (the reductant) can be enhanced more, while maintaining the conversion efficiency (oxygen capacity) thereof.

The secondary metallic element is a metallic element belonging to the group III, which is preferably yttrium (Y) or a rare earth element, and more preferably at least one of yttrium (Y), lanthanum (La), praseodymium (Pr), samarium (Sm) or gadolinium (Gd). Each of these metallic elements easily distorts the crystal structure of cerium oxide (the oxygen carrier) due to relation between ionic radiuses of itself and Ce, and has electrons both in a d-orbital and a f-orbital, so that these electrons are assumed to contribute to bond strength of the oxygen elements in cerium oxide (CeO₂). Therefore, both of the conversion rate and the conversion efficiency can be improved more.

Among them, La is preferably selected as the secondary metallic element. Both of Ce and La have electrons in 5d-electron orbitals, whereby it is considered that not only the distortion of the crystal structure due to a difference between their ionic radiuses but also the electronically stable structure are likely to be formed. Therefore, the present inventors assume that the mobility of oxygen elements (oxygen ions) in the oxygen carrier can be enhanced.

Further, the oxygen carrier preferably includes an auxiliary element other than the secondary metallic element. By including the auxiliary element, the oxygen carrier can improve the conversion rate and/or conversion efficiency depending on a kind of the auxiliary element or combinations with other elements.

The auxiliary element is preferably at least one of elements belonging to a fourth period or a fifth period of the periodic table. Since an ionic radius of the auxiliary element is relatively close to that of Ce, the crystal structure of the oxygen carrier can be prevented or suppressed from being unstable.

Specific examples of the auxiliary element include scandium (Sc), chromium (Cr), iron (Fe), manganese (Mn), nickel (Ni), copper (Cu), zirconium (Zr), niobium (Nb), cobalt (Co), zinc (Zn), hafnium (Hf), indium (In) and the like. These auxiliary elements may be used alone or in combinations of two kinds or more. Among them, one of Fe, Mn, Cu and Zr is preferable as the auxiliary element.

A ratio of a molar amount of the auxiliary element to the total molar amount of the primary metallic element and the secondary metallic element is preferably 0.7 or less or less, more preferably 0.5 or less, further preferably 0.3 or less, and particularly preferably 0.1 or less. A lower limit of this amount ratio (molar ratio) is not particularly limited, but is preferably 0.01 or more, and more preferably 0.05 or more. In this case, the effect of the oxygen carrier due to the inclusion of the auxiliary element can be sufficiently exhibited.

In the gas after the contact of the oxygen carrier (the reductant) with carbon dioxide, a ratio of the amount of carbon monoxide to the total amount of carbon dioxide and carbon monoxide (conversion rate) is preferably 0.85 or more, more preferably 0.9 or more, further preferably 0.92 or more, and particularly preferably 0.95 or more. If the reductant has such a high conversion rate as described above, the separation operation of carbon monoxide in the latter stage can be simplified or omitted more securely.

Further, it is also considered that the crystal structure of the primary metallic element is stabilized by the solid-solving of the secondary metallic element therein, and thereby increasing a heat resistance temperature. As a result, the reductant of the present disclosure can be used also at high temperatures of more than 650°C.

Furthermore, in the case where the secondary metallic element is solid-solved in the crystal of the primary metallic element, the crystal structure is considered to be more stable when the reductant is used at a high temperature of more than 650°C than when used at a temperature of 650°C or less. At the high temperature of more than 650°C, the crystal structure is likely to be spontaneously recovered into a thermodynamically stable solid solution structure, so that an initial activity is likely to be maintained even if repeating oxidation and reduction of the reductant.

The reductant of the present disclosure may be composed of the oxygen carrier alone, or may include the oxygen carrier and a binder for binding the oxygen carrier. As the latter aspect, a form in which fine particles of the oxygen carrier are bound together with a binder (support). In this case, a shape retention property of the reductant can be more enhanced, and the a specific surface area of the reductant can be adjusted easily.

In the case where the reductant includes the binder, proportion of the binder is preferably 60 parts by mass, more preferably 50 parts by mass, and further preferably 40 parts by mass with respect to 100 parts by mass of the reductant. Also, the proportion of the binder may be 1 part by mass or more, 2 parts by mass or more, 3 parts by mass or more, 4 parts by mass or more, 5 parts by mass or more, 6 parts by mass or more, 7 parts by mass or more, 8 parts by mass or more, 9 parts by mass or more, or 10 parts by mass or more. Incidentally, the lower limit and the upper limit can be arbitrarily combined to specify a preferable range of the proportion of the binder. By setting the amount of the binder to be included in the reductant within the above range, the conversion efficiency of carbon dioxide into carbon monoxide by the reductant can be further improved, while maintaining the high shape retention property of the reductant.

As the binder, any compounds, which are not limited unless they are likely to be denatured by contact with the source gas, depending on reaction conditions or the like, can be used, and for example, inorganic materials such as oxide, nitride, oxynitride and carbide, carbon materials (graphite, graphene and the like) and the like can be exemplified.

Among them, the binder is preferably oxide, more preferably oxide including at least one of magnesium (Mg), titanium (Ti), zirconium (Zr), aluminum (Al) and silicon (Si), further preferably aluminum oxide or titanium oxide, or particularly preferably titanium oxide. These oxides are preferable because their thermal stability are high and they bind the fine particles of the oxygen carrier easily and stably.

Packing density of the reductant is preferably 4 g/mL or less, more preferably 0.5 g/mL or more and 3 g/mL or less, and further preferably 1 g/mL or more and 2.5 g/mL or less. If the packing density is too low, passing speed of gas becomes too high, so that a period of time for the reductant to be in contact with the source gas and the reduction gas is shorten. As a result, the conversion efficiency of carbon dioxide into carbon monoxide by the reductant, and a regeneration efficiency of the oxidized reductant by the reduction gas are likely to be decreased. On the other hand, if the packing density is too high, the passing speed of the gas becomes too low, so that the reaction is hard to proceed, or production of the product gas requires a long period of time.

Pore volume of the reductant is preferably 0.1 cm³/g or more, more preferably 1 cm³/g or more and 30 cm³/g or less, and further preferably 5 cm³/g or more and 20 cm³/g or less. If the pore volume is too small, the source gas and the reduction gas are hard to enter inside of the reductant. As a result, a contact area of the reductant with the source gas and the reduction gas is decreased, so that the conversion efficiency of carbon dioxide into carbon monoxide by the reductant and the regeneration efficiency of the oxidized reductant by the reduction gas are likely to be decreased. On the other hand, even if the pore volume is increased beyond the higher limit, any further improvement in effects cannot be expected, and mechanical strength of some kinds of the reductants tends to be lowered.

A shape of the reductant is not particularly limited, but for example, a granular shape is preferable. If the reductant is granular-shaped, the packing density of the reductant can be adjusted easily within the above-described range.

Herein, the granular shape conceptually includes powder, particles, blocks, pellets and the like, and a form thereof may be any of spherical, plate, polygonal, crushed, columnar, needle, scaled and the like.

An average particle diameter of the reductant is preferably 1 pm or more and 5 mm or less, more preferably 10 pm or more and 1 mm or less, and further preferably 20 pm or more and 0.5 mm or less. The reductant having the above-described average particle diameter, the packing density thereof can be adjusted easily within the above-described range.

Incidentally, in the present specification, an average particle diameter denotes an average value of particle diameters of arbitrary 200 reductant particles in one visual field which is observed with an electron microscope. Herein, the "particle diameter" denotes the maximum length of a distance between two points on an outline of the reductant. Incidentally, in the case where the reductant is columnar-shaped, the maximum length of a distance between two points on outlines of end surfaces is denoted by the "particle diameter". Further, in the case where the reductant is, for example, block-shaped, and primary particles are aggregated, the average particle diameter denotes an average particle diameter of secondary particles. A BET specific surface area of the reductant is preferably 1 m²/g or more and 500 m²/g or less, more preferably from 3 m²/g or more and 450 m²/g or less, and further preferably 5 m²/g or more and 400 m²/g or less. By setting the BET specific surface area within the above-described range, the conversion efficiency of carbon dioxide into carbon monoxide by the reductant can be increased easily.

Moreover, in the present disclosure, since the secondary metallic element is stably solid-solved in the oxygen carrier (cerium oxide), oxygen capacity of the reductant can be maintained to be high over a wide range of temperatures from low (about 400°C) to high (about 850°C). That is, the reductant of the present disclosure can efficiently convert carbon dioxide into carbon monoxide in a wide range of temperatures, and can be efficiently reduced by the reduction gas including hydrogen. The oxygen capacity of the reductant at 400°C is preferably 0.1% by mass or more and 40% by mass or less , and more preferably 0.5% by mass or more and 30% by mass or less. If the oxygen capacity of the reductant at the low temperature is within the above-described range, the oxygen capacity even at a temperature during an actual operation (temperature of more than 650°C) is meant to be sufficiently high, thereby proving that the reductant has the extremely high conversion efficiency of carbon dioxide into carbon monoxide.

### [Method for producing reductant.]

Next, a method for producing the reductant will be described.

The method for producing the reductant is not limited particularly, but for example, a sol-gel method, a coprecipitation method, a solid phase method, a hydrothermal synthesis method and the like can be exemplified.

The reductant can be produced, for example, as follows. Firstly, salts of the metallic elements that compose the reductant (in the case of using the above-described inorganic binder, salts of the elements that compose the inorganic binder may be included) are dissolved into water so as to prepare aqueous solution. Next, this aqueous solution is gelated, and is subsequently dried and sintered. That is, the reductant of the present disclosure can be easily and securely produced by the so-called sol-gel method.

Incidentally, for the preparation of the aqueous solution, acidic water that is adjusted to be acid with, for example, citric acid, acetic acid, malic acid, tartaric acid, hydrochloric acid, nitric acid, and a mixture thereof may be used.

As the salts of the metallic elements, for example, nitrate, sulfate, chloride, hydroxide, carbonate, and composites thereof can be exemplified, but nitrate is preferable among them. In addition, as the salts of the metallic elements, hydrate may also be used as necessary.

The drying of the gel is preferably carried out at a temperature of 20°C or more and 200°C or less, and more preferably 50°C or more and 150°C or less, for preferably 0.5 hours or more and 20 hours or less, and more preferably 1 hour or more and 15 hours or less. By drying as described above, the gel can be dried uniformly.

The sintering of the gel is preferably carried out at a temperature of 300°C or more and 1200°C or less, and more preferably at 700°C or more and 1000°C or less, for preferably 1 hour or more and 24 hours or less, and more preferably 1.5 hours or more and 20 hours or less. The gel is preferably transformed into oxide by the sintering, and can be easily converted into the reductant by the sintering in the above-described conditions. In addition, if sintering in the above-described conditions, the reductant can also be prevented from excessive particle growth.

Until reaching the above-described sintering temperature, the temperature is increased preferably at a temperature increase rate of 1°C/minute or more and 20°C/minute or less, and more preferably of 2°C/minute or more and 10°C/minute or less. Thereby, the particle growth of the reductant can be accelerated, and cracking of the crystals (particles) can also be avoided.

Further, the reductant can be produced also as follows.

Firstly, the oxides including the respective metallic elements that compose the reductant are pulverized while being mixed. For the pulverization, for example, ball mill, bead mill, jet mill, hammer mill and the like can be used. Moreover, this pulverization may be performed in either a dry process or a wet process.

If using the binder, the binder is mixed with the above-described oxides. As the binder, besides the above-described inorganic binders, organic binders can be used. As the organic materials, for example, various kinds of resin, such as olefin resin, acrylic resin, styrene resin, ester resin, ether resin and vinyl resin, various kinds of wax, various kinds of fatty acid and the like can be exemplified. Further, in this case, the above-mentioned oxides produced by a sol-gel method, a coprecipitation method, a solid phase method, a hydrothermal method and the like can be used as the oxides.

Next, a block object is pulverized and then sintered. This sintering is carried out preferably at a temperature of 300°C or more and 1200°C or less, and more preferably 700°C or more and 1000°C or less, for preferably 1 hour or more and 24 hours or less, and more preferably 1.5 hours or more and 20 hours or less.

At this time, a part or all of the organic binder may be lost by the sintering.

Thereafter, the sintered block subject is pulverized similarly to the above, thereby obtaining the reductant.

### [Method of using reductant]

The reductant of the present disclosure can be used by, for example, the chemical looping method as described above. In addition, the reductant of the present disclosure can also be used for the purpose of generating carbon monoxide (carbon valuable substance) by reducing carbon dioxide by the contact as described above.

More specifically, it is preferable to carry out a reduction reaction of carbon dioxide and a reduction reaction of the reductant, and the reductant is preferably used to be circulated between the reduction reaction of carbon dioxide and the reduction reaction of the reductant. Incidentally, in the reduction reaction of the reductant, reduction gas including another reducing substance is used.

In addition, the reductant of the present disclosure is preferably used in the so-called reverse water-gas shift reaction. The reverse water-gas shift reaction is a reaction for generating carbon monoxide and water from carbon dioxide and hydrogen. In the case of applying the chemical looping method, the reverse water-gas shift reaction is performed being divided into the reduction reaction of the reductant (first process) and the reduction reaction of carbon dioxide (second process), where the reduction reaction of the reductant is a reaction shown by Formula (A) below, and the reduction reaction of carbon dioxide is a reaction shown by Formula (B) below.

H₂ (gas) + nMOₓ (solid) → H₂O (gas) + nMO_{x-1/n} (solid) (A)

CO₂ (gas) + nMO_{x-1/n} (solid) → CO (gas) + nMOₓ (solid) (B)

Incidentally, in Formulae (A) and (B), n denotes a natural number, and x varies depending the kind of the metallic element of M, which is usually 2 when M is cerium (Ce), for example.

That is, in the reduction reaction of the reductant, hydrogen, which is a kind of a reductant, is oxidized to generate water. Further, in the reduction reaction of carbon dioxide, carbon dioxide is reduced to generate carbon monoxide, which is a kind of a carbon valuable substance.

A reaction temperature (contact temperature of the reductant with the reduction gas) in the reduction reaction of the reductant may be a temperature at which the reduction reaction can proceed, but is preferably more than 650°C, more preferably 700°C or more, further preferably 750°C or more, and particularly preferably 800°C or more. In the above-described temperature range, the efficient reduction reaction of the reductant can proceed.

An upper limit of the reaction temperature is preferably 1050°C or less, more preferably 1000°C or less, further preferably 950°C or less, particularly preferably 900°C or less, and most preferably 850°C or less. By setting the upper limit of the reaction temperature within the above-described range, the economical efficiency can be improved.

Incidentally, the lower limit and the upper limit can be arbitrarily combined to specify a preferable range of the reaction temperature.

Moreover, an amount of hydrogen (the reduction gas) to be in contact with the oxidized reductant in the reduction reaction of the reductant is preferably 0.01 mmol/g or more and 50 mmol/g or less, more preferably 0.1 mmol/g or more and 45 mmol/g or less, and further preferably 0.5 mmol/g or more and 35 mmol/g or less, particularly preferably 1 mmol/g or more and 20 mmol/g or less, and most preferably 2 mmol/g or more and 10 mmol/g or less per unit mass of the oxygen carrier. The reductant of the present disclosure has a high hydrogen utilization rate, because oxygen elements move into and out of the reductant smoothly. Therefore, the reductant of the present disclosure is sufficiently reduced (regenerated) by a small amount of hydrogen. Thus, the reductant of the present disclosure contributes to saving of energy required for generating hydrogen and, in turn, reducing of carbon dioxide generated for obtaining the energy.

Incidentally, the hydrogen utilization rate (%) is a ratio of an amount of generated carbon monoxide (mole) to an input amount (mole) of hydrogen that is brought in contact with 1 g of the reductant, which is represented as a percentage.

Further, in the case where the reductant is composed of the simple oxygen carrier (alone), "per unit mass of the oxygen carrier" can be read as "per unit mass of the reductant".

Moreover, the reaction temperature (contact temperature of the reductant with the carbon dioxide) in the reduction reaction of carbon dioxide is preferably more than 650°C, more preferably 700°C or more, further preferably 750°C or more, and particularly preferably 800°C or more. In the above-described temperature range, the efficient reduction reaction of carbon dioxide can proceed.

An upper limit of the reaction temperature is preferably 1050°C or less, more preferably 1000°C or less, further preferably 950°C or less, particularly preferably 900°C or less, and most preferably 850°C or less. Since the reductant can cause the reduction reaction of carbon dioxide to carbon monoxide with high efficiency even at low temperatures, the temperature of the reduction reaction of carbon dioxide can be set to be relatively low. Further, by setting the upper limit of the reaction temperature within the above-described range, not only waste heat utilization is facilitated, but also the economic efficiency can be further improved .

Incidentally, the lower limit and the upper limit can be arbitrarily combined to specify a preferable range of the reaction temperature.

Further, in the reduction reaction of carbon dioxide, an amount of carbon dioxide (the source gas) to be in contact with the reductant, which is reduced by the contact with hydrogen (the reduction gas), is preferably 0.01 mmol/g or more and 50 mmol/g or less, more preferably 0.1 mmol/g or more and 45 mmol/g or less, further preferably 0.5 mmol/g or more and 35 mmol/g or less, particularly preferably 1 mmol/g or more and 20 mmol/g or less, and most preferably 2 mmol/g or more and 10 mmol/g or less per unit mass of the oxygen carrier. According to the reductant of the present disclosure, oxygen elements move into and out of the reductant smoothly. Therefore, the reductant of the present disclosure has a high conversion efficiency of carbon dioxide into carbon monoxide (that is, the generation amount of carbon monoxide is large), thereby contributing to the reduction of carbon dioxide. Whereas, since the reduction reaction is efficiently carried out by the reduction gas that includes hydrogen, the reductant can be regenerated with a small amount of hydrogen.

Furthermore, concentration of carbon dioxide included in the source gas to be in contacted with the reductant is preferably 50% or more, more preferably 80% or more, further preferably 85% or more, particularly preferably 90% or more, and most preferably 95% or more. Thereby, the separation operation of the converted carbon monoxide can be further simplified or omitted. Incidentally, the source gas may also be carbon dioxide gas with concentration of 100%.

In the gas generated at this time, a ratio of an amount of carbon monoxide to a total amount of carbon dioxide and carbon monoxide (conversion rate) is preferably 0.85 or more (more preferably 0.9 or more, further preferably 0.92 or more, and particularly preferably 0.95 or more).

Then, in the gas satisfying the above-described criteria, the amount of carbon monoxide is preferably 0.01 mmol/g or more, and more preferably 0.1 mmol/g or more and 1 mmol/g or less per unit mass of the oxygen carrier.

In the present disclosure, the reduced products (carbon valuable substance) obtained by the reduction reaction of carbon dioxide include carbon monoxide, and may also include materials other than carbon monoxide or a mixture of carbon monoxide and the other materials. As the other materials, for example, methane can be exemplified. The reduced products such as carbon monoxide obtained by the reduction reaction of carbon dioxide is preferably converted into an organic material or the like by microbial fermentation or the like. As the microbial fermentation, anaerobic fermentation can be exemplified. As the organic material to be obtained, methanol, ethanol, acetic acid, butanol, derivatives thereof, mixtures thereof, compounds of C5 or more such as isoprene, and the like can be exemplified.

In addition, the reduced product such as carbon monoxide may be converted into C1 to C20 compounds including hydrocarbon or alcohol which is synthesized by conventional petrochemistry by metal oxide or the like. As a specific compound to be obtained, methane, ethane, ethylene, propylene, methanol, ethanol, propanol, acetaldehyde, diethylether, acetic acid, butyric acid, diethyl carbonate, butadiene and the like can be exemplified.

### [Property of reductant]

The reductant of the present disclosure preferably has following properties.

That is, when a reaction tube of stainless steel with an inner diameter of 8 mm, in which a pressure gauge is disposed in a flow channel, is filled with the reductant to a height of 40 cm, and nitrogen gas with a concentration of 100 vol% is allowed to pass through the reaction tube at 30 mL/min, pressure increase after 10 minutes is preferably 0.03 MPaG or less, and more preferably 0.01 MPaG or less.

The reductant exhibiting the above-described properties can be judged to have the packing density and the pore volume satisfying the above-described ranges, and can sufficiently increase the conversion efficiency of carbon dioxide into carbon monoxide.

### [Gas production method]

The gas production method of the present disclosure is a method for producing product gas that includes a carbon valuable substance by reducing carbon dioxide by bringing the reductant in contact with source gas that contains carbon dioxide.

A reductant used in the gas production method of the present disclosure contains an oxygen carrier having oxygen ion conductivity, and this oxygen carrier includes cerium (Ce) as a primary metallic element and a metallic element belonging to the group III of the periodic table as a secondary metallic element.

Incidentally, a favorable structure, shape, properties and the like of the reductant are similar to those described above.

In the gas production method of the present disclosure, it is preferable to produce the product gas, in which, when bringing the reductant in contact with the source gas including carbon dioxide after bringing the reductant in contact with reduction gas that includes hydrogen in an amount of 0.01 mmol/g or more and 50 mmol/g or less per unit mass of the oxygen carrier, a ratio of an amount of the carbon valuable substance to a total amount of the carbon dioxide and the carbon valuable substance (conversion rate) is 0.85 or more, and an amount of the carbon valuable substance is 0.01 mmol/g or more per unit mass of the oxygen carrier.

Incidentally, preferable ranges of the amount of the reduction gas to be in contact with the reductant, the conversion rate, the amount of the carbon valuable substance to be generated and the like are similar to those described above, respectively.

In the present disclosure as described above, the reductant that can simplify or omit the separation operation of the carbon valuable substance such as carbon monoxide in the latter stage and the gas production method using the reductant can be provided. The reductant of the present disclosure can withstand its use at high temperatures, and thus can convert carbon dioxide into carbon monoxide (carbon valuable substance) more efficiently by the chemical looping reaction at high temperatures.

In addition, the present disclosure may be provided in each of the following aspects.
(1) A reductant that reduces carbon dioxide and generates a carbon valuable substance by contact, the reductant comprising an oxygen carrier having oxygen ion conductivity, wherein the oxygen carrier includes: cerium (Ce) as a primary metallic element; and a metallic element belonging to a group III of a periodic table as a secondary metallic element.
(2) The reductant according to (1), wherein a ratio of a molar amount of the primary metallic element to a total molar amount of the metallic elements included in the oxygen carrier is 0.3 or more and 0.95 or less.
(3) The reductant according to (1) or (2), wherein the secondary metallic element is at least one of yttrium (Y), lanthanum (La), praseodymium (Pr), samarium (Sm) or gadolinium (Gd).
(4) The reductant according to any one of (1) to (3), wherein the oxygen carrier further includes an auxiliary element other than the secondary metallic element.
(5) The reductant according to (4), wherein a ratio of a molar amount of the auxiliary element to a total molar amount of the primary metallic element and the secondary metallic element is 0.7 or less.
(6) The reductant according to (4) or (5), wherein the auxiliary element is at least one of elements belonging to a fourth period or a fifth period of a periodic table.
(7) The reductant according to any one of (4) to (6), wherein the auxiliary element is at least one of iron (Fe), manganese (Mn), copper (Cu) or zirconium (Zr).
(8) The reductant according to any one of (1) to (7), wherein a ratio of a molar amount of the secondary metallic element to a molar amount of the primary metallic element is 0.01 or more and 0.99 or less.
(9) The reductant according to any one of (1) to (8), further comprising a binder that binds the oxygen carrier.
(10) The reductant according to (9), wherein proportion of the binder included in the reductant is 1 part by mass or more and 60 parts by mass or less per 100 parts by mass of the reductant.
(11) The reductant according to (9) or (10), wherein the binder is an oxide including at least one of magnesium (Mg), titanium (Ti), zirconium (Zr), aluminum (Al) or silicon (Si).
(12) The reductant according to any one of (1) to (11), wherein the carbon valuable substance includes carbon monoxide.
(13) The reductant according to any one of (1) to (12), wherein the contact with carbon dioxide is carried out at a temperature of more than 650°C.
(14) The reductant according to any one of (1) to (13), which is oxidized by the contact with carbon dioxide, and is subsequently reduced by contact with reduction gas including hydrogen.
(15) The reductant according to (14), wherein the contact with the reduction gas including hydrogen is carried out at a temperature of more than 650°C.
(16) The reductant according to (14) or (15), wherein an amount of the reduction gas including hydrogen that is brought in contact with the reductant is 0.01 mmol/g or more and 50 mmol/g or less per unit mass of the oxygen carrier.
(17) The reductant according to any one of (1) to (16), wherein, in gas after the contact of the reductant with the carbon dioxide, a ratio of an amount of the carbon valuable substance to a total amount of the carbon dioxide and the carbon valuable substance is 0.85 or more.
(18) The reductant according to (16) or (17), wherein, in gas after bringing the reductant, which is reduced by the contact with the reduction gas including hydrogen, in contact with the carbon dioxide, a ratio of an amount of the carbon valuable substance to a total amount of the carbon dioxide and the carbon valuable substance is 0.85 or more, and an amount of the carbon valuable substance is 0.01 mmol/g or more per unit mass of the oxygen carrier.
(19) A gas production method for producing product gas that includes a carbon valuable substance by reducing carbon dioxide by bringing a reductant in contact with source gas that includes the carbon dioxide, wherein the reductant includes an oxygen carrier having oxygen ion conductivity, and the oxygen carrier includes: cerium (Ce) as a primary metallic element; and a metallic element belonging to a group III of a periodic table as a secondary metallic element.
(20) The gas production method according to (19), wherein, when bringing the reductant in contact with the source gas including carbon dioxide after bringing the reductant in contact with the reduction gas that includes hydrogen in an amount of 0.01 mmol/g or more and 50 mmol/g or less per unit mass of the oxygen carrier, the product gas having: a ratio of an amount of the carbon valuable substance to a total amount of the carbon dioxide and the carbon valuable substance, which is 0.85 or more; and an amount of the carbon valuable substance, which is 0.01 mmol/g or more per unit mass of the oxygen carrier, is produced.

Needless to say, the present disclosure is not limited to those.

Various embodiments of the present disclosure have been described, but as described, these are presented as examples and are not intended to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the invention described in claims and the equivalent scope thereof.

For example, the reductant and the gas production method of the present disclosure may have any other arbitrary additional configuration to the above embodiments, may be substituted with any arbitrary configuration that performs similar functions, and some configurations may be omitted.

In the above embodiment, the gas including hydrogen is described as a representative of the reduction gas, but, instead of or in addition to hydrogen, gas containing at least one kind selected from hydrocarbons (for example, methane, ethane, acetylene and the like) and ammonia can be used as a reducing substance in the reduction gas.

Further, as the primary metallic element, at least one of iron (Fe), manganese (Mn), copper (Cu), zirconium (Zr), strontium (Sr), barium (Ba) or calcium (Ca) can be used instead of or in combination with cerium (Ce).

In this case, as the auxiliary element, an element different from the primary metallic element can be selected and used.

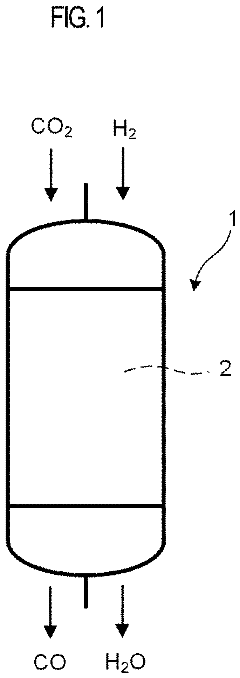

In particular, the use of the reductant of the present disclosure in the chemical looping reaction can simplify or omit the separation operation of carbon monoxide. This chemical looping reaction can be carried out in the aspects as illustrated in FIGs. 1 to 3.

FIGs. 1 to 3 are schematic views for explaining the aspects of carrying out the chemical looping reaction using the reductant of the present disclosure, respectively.

In the aspect shown in FIG. 1, the reduction gas and the source gas are supplied sequentially into one reactor 1 which stores a reductant 2.

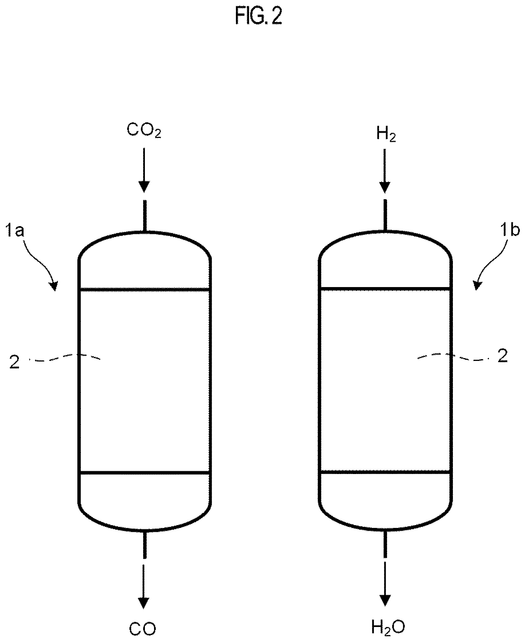

Further, in the aspect shown in FIG. 2, the reduction gas is supplied into one of two reactors 1a and 1b which store the reductant 2, and the source gas is supplied to the other, while the two kinds of the gas (the reduction gas and the source gas) are alternately switched to be supplied over time.

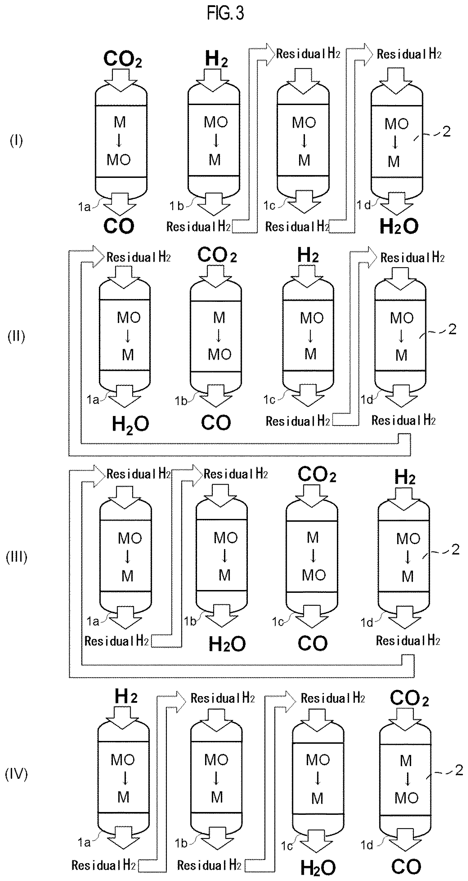

In addition, in the aspect shown in FIG. 3, the reduction gas is supplied to three of plural (four in the illustrated configuration) reactors 1a to 1d which store the reductant 2, and the source gas is supplied into the remaining one reactor, while the two kinds of the gas (the reduction gas and the source gas) are alternately switched to be supplied over time.

Specifically, in a first turn shown in FIG. 3(I), the source gas (CO₂) is supplied into the reactor 1a, and the source gas (CO) after passing through the reactor 1a is discharged.

Whereas, regarding the remaining reactors 1b to 1d, the reduction gas (H₂) is firstly supplied into the reactor 1b, and the reduction gas (residual H₂) after passing through the reactor 1b is supplied into the reactor 1c.

After that, the reduction gas (residual H₂) after passing through the reactor 1c is supplied to the reactor 1d, and the reduction gas (H₂O) after passing through the reactor 1d is discharged.

Subsequently, in a second turn shown in FIG. 3(II), the source gas (CO₂) is supplied into the reactor 1b and allowed to pass therethrough, while the reduction gas (H₂) is supplied into the reactors 1c, 1d and 1a sequentially in the order and allowed to pass therethrough.

Thereafter, in a third turn shown in FIG. 3(III), the source gas (CO₂) is supplied into the reactor 1c and allowed to pass therethrough, while the reduction gas (H₂) is supplied into the reactors 1d, 1a and 1b sequentially in the order and allowed to pass therethrough.

Then, in a fourth turn shown in FIG. 3(IV), the source gas (CO₂) is supplied into the reactor 1d and allowed to pass therethrough, while the reduction gas (H₂) is supplied into the reactors 1a, 1b and 1c sequentially in the order and allowed to pass therethrough.

In the present aspect, the sequential operations from the first turn to the fourth turn, as are one cycle, are repeated several times, whereby the conversion of CO₂ into CO can be carried out continuously and stably.

For example, in the case of using the reductant 2 whose reduction efficiency in the oxidized state by H₂ (reductant material) is lower than the conversion efficiency of CO₂ to CO, if the reduction gas is allowed to pass through the one reactor only once, H₂ that has not been used for reducing the oxidized reductant 2 (residual H₂) becomes wasted. In the present aspect, on the other hand, the reduction gas can pass through the three reactors sequentially, or in other words, can pass through the one reactor three times. Thereby, the waste of H₂ (reduction gas) can be prevented.

Incidentally, the number of the reactors, through which the reduction gas is allowed to pass sequentially, is not limited to three, and may also be 2, 4 or more. Further, the source gas may also pass through the two or more reactors sequentially.

In this case, by appropriately controlling the connection order of the plural reactors or the supply order of the reduction gas and the source gas, the reduction gas can pass through the one reactor twice or more continuously. Thereby, an apparent amount of the reduction gas (hydrogen) per unit mass of the oxygen carrier can be increased, so that the oxidized reductant 2 can be reduced (regenerated) efficiently.

Incidentally, in the case of carrying out a process of the aspect shown in FIG. 3, an amount of the reduction gas (hydrogen) to be supplied per unit mass of the oxygen carrier is increased just apparently. For this reason, in the present specification, the amount of the reduction gas which is actually brought in contact with the reductant 2 per unit mass of the oxygen carrier will be specified based on the unit mass of the oxygen carrier that can be reacted with the source gas.

### [Example]

Hereinafter, the present disclosure will be described more specifically by way of examples and comparative examples, but is not limited to these examples.

### 1. Preparation of precursor of reductant

As a precursor of a reductant (element source for composing the reductant), following compounds were prepared.

### (Primary metallic element source)

- Cerium(III) nitrate hexahydrate (produced by FUJIFILM Wako Pure Chemical Corporation, purity: 98.0%)
- Sodium tungstate(VI) dihydrate (produced by FUJIFILM Wako Pure Chemical Corporation)

### (Secondary metallic element)

- Lanthanum(III) nitrate hexahydrate (produced by FUJIFILM Wako Pure Chemical Corporation, purity: 99.9%)
- Gadolinium nitrate hexahydrate (produced by FUJIFILM Wako Pure Chemical Corporation, purity: 99.5%)
- Samarium nitrate hexahydrate (produced by FUJIFILM Wako Pure Chemical Corporation, purity: 99.5%)
- Yttrium(III) nitrate hexahydrate (produced by FUJIFILM Wako Pure Chemical Corporation, purity: approx. 100%)
- Praseodymium(III) nitrate hexahydrate (produced by FUJIFILM Wako Pure Chemical Corporation, purity: 99.9%)
- Cesium nitrate (produced by FUJIFILM Wako Pure Chemical Corporation, purity: 99.9%)

### (Auxiliary element)

- Iron(III) nitrate nonahydrate (produced by FUJIFILM Wako Pure Chemical Corporation, purity: 99.9%)
- Manganese(II) nitrate hexahydrate (produced by FUJIFILM Wako Pure Chemical Corporation, purity: 98.0%)
- Copper(II) nitrate trihydrate (produced by FUJIFILM Wako Pure Chemical Corporation, purity: 99.0%)
- Zirconium nitrate dihydrate (produced by FUJIFILM Wako Pure Chemical Corporation, purity: 97.0%)

### (Binder)

- Titanium(IV) chloride solution (produced by FUJIFILM Wako Pure Chemical Corporation, containing 16.0% to 17.0% of titanium and 29.0% to 33.0% of chlorine) or 30% titanium(IV) sulfate solution (produced by FUJIFILM Wako Pure Chemical Corporation)
- Aluminum(III) nitrate nonahydrate (produced by FUJIFILM Wako Pure Chemical Corporation)
- Aluminum oxide (produced by FUJIFILM Wako Pure Chemical Corporation)

### 2. Production of reductant

### (Example 1)

Firstly, predetermined amounts of cerium(III) nitrate hexahydrate, lanthanum(III) nitrate hexahydrate and iron(III) nitrate nonahydrate were weighed, respectively.

Next, 6.06 g of citric acid (produced by FUJIFILM Wako Pure Chemical Corporation, purity: 99.5%) was weighed, and then was dissolved into 96 mL of deionized water, thereby obtaining aqueous solution of citric acid. Thereafter, the above precursor (metal nitrate) was added into the aqueous solution of citric acid at the room temperature while being stirred, thereby preparing aqueous solution of the precursor. Incidentally, Ce:La:Fe (molar ratio) in the precursor aqueous solution was 0.7:0.3:0.05.

After 30 minutes, 2.15 g of ethylene glycol (produced by FUJIFILM Wako Pure Chemical Corporation, purity: 99.5%) was added into the aqueous solution of the precursor, and a temperature thereof was increased to 80°C.

The temperature was maintained at 80°C while being stirred continuously until viscous gel was formed. Thereafter, the gel was moved into a drying oven.

The gel was dried at 120°C for 5 hours.

The thus produced swelled block object of the organic and the inorganic compound was pulverized, was heated at a rate of 8°C/minute from the room temperature to 450°C under the air atmosphere, and was subsequently sintered at 450°C for 4 hours. Thereafter, the temperature was further increased at a rate of 8°C/minute to 950°C, and the block object was sintered at 950°C for 8 hours.

Finally, the sintered block object was mechanically and finely pulverized, thereby obtaining a reductant that is composed solely of the oxygen carrier, which was the target product. Incidentally, the reductant was granular-shaped.

In order to facilitate the filling into the reaction tube or satisfy the requirements of the pressure increase, which is described in the section of [Property of reductant], the tableted reductant was used for the test as necessary.

### (Examples 2 to 27 and Comparative Examples 1 and 2)

Each of reductants that was composed solely of the oxygen carrier or composed of the oxygen carrier and the binder was produced similarly to Example 1, except that the kind and the amount of the reductant or the precursor of the binder to be used were changed. Incidentally, the reductant was granular-shaped.

### (Example 28)

Firstly, an oxygen carrier was produced similarly to Example 1, so that Ce:La:Fe (molar ratio) was able to be 0.9:0.1:0.01. Subsequently, 2.90 g of the oxygen carrier was weighed, was mixed with 0.10 g of aluminum oxide, and was thereafter pulverized in a mortar for 10 minutes, thereby obtaining a reductant composed of the oxygen carrier and the binder.

### (Comparative Example 3)

Firstly, as raw materials, sodium tungstate(VI) dihydrate, lanthanum(III) nitrate hexahydrate and manganese(II) nitrate hexahydrate were prepared.

Next, these raw materials were dissolved into distilled water so as to prepare 1 mol/L of aqueous solution of the raw materials (Solution A). Incidentally, a molar ratio of La, W and Mn in Solution A was set to be 1:1:1.

Further, sodium carbonate was dissolved into distilled water so as to prepare a 1 mol/L aqueous solution of sodium carbonate (Solution B).

Next, Solution A and Solution B were simultaneously dropped into a container that stored 20 mL of distilled water at 70°C, thereby preparing mixed solution. Incidentally, a rate of dropping Solution A was set at 10 mL/minute, and the mixed solution was stirred so as not to aggregate generated precipitate.

Further, a temperature of the mixed solution was maintained at 70°C, and a rate of dropping Solution B was also adjusted so as to keep the pH at 7.0.

Thereafter, the mixed solution was kept at 70°C, and was continued to be stirred at a rate of 50 rpm or more so as to age the mixed solution for 3 hours. After the aging, the precipitate was collected by filtration and washed with water sufficiently.

Then, after drying the collected precipitate with a dryer at 120°C for 12 hours, a temperature of the collected precipitate was increased at a rate of 8°C/minute from a room temperature to 450°C under the air atmosphere, and the collected precipitate was subsequently sintered at 450°C for 4 hours. Thereafter, the temperature was further increased at the rate of 8 °C/minute to 950°C, and then, the precipitate was sintered at 950 °C for 8 hours.

Finally, the sintered block object was mechanically and finely pulverized, thereby obtaining a reductant that is composed solely of the oxygen carrier, which was the target product. Incidentally, the reductant was granular-shaped.

In order to facilitate the filling into the reaction tube or satisfy the requirements of the pressure increase, which is described in the section of [Property of reductant], the tableted reductant was used for the test as necessary.

### 3. Identification of reductant

A metal composition in the reductant (oxygen carrier) was analyzed and identified by an ICP emission spectral analysis with argon gas using SPECTRO ARCOS produced by AMETEK Inc.

Measurement solution was prepared by a following procedure. 50 mg to 100 mg of the reductant was dissolved into 100 mL of 1% nitric acid or 1% hydrofluoric acid, and the obtained solution was further diluted by 10 times.

Results of the analysis of the above-described measurement solution (molar ratio of the metallic elements) will be shown in Table 1.

### 4. Measurement of conversion rate

Using a rapid catalyst evaluation system provided with a fixed-bed flow reactor and a gas chromatograph mass spectrometer (GC/MS) directly connected to the reactor was used to measure an amount of carbon monoxide generated by the reductant in following procedures.

Specifically, a quartz reaction tube with an inner diameter of 4 mm was prepared, and was filled with the reductant in powder or a columnar shape which was molded into a long diameter of 3 mm, so that a filling amount was able to be 200 mg or more and 1100 mg or less.

Thereafter, while flowing helium gas at a flow rate of 5 mL/minute, a temperature was increased at a rate of 15°C/minute to 850°C, and the same temperature was maintained for 5 minutes to stabilize the temperature. Then, in order to activate the oxygen carrier, hydrogen gas (reduction gas) was flown at a flow rate of 5 mL/minute for 20 minutes so as to cause a reduction reaction of the oxygen carrier (first process), thereby reducing the oxygen carrier. At this time, the gas discharged from an exhaust port contained water vapor.

Subsequently, after flowing helium gas at a flow rate of 5 mL/minute for 10 minutes for gas exchange, carbon dioxide gas was flown at a flow rate of 5 mL/minute for 20 minutes so as to cause a reduction reaction of carbon dioxide (second process), thereby reducing carbon dioxide gas (source gas). At this time, the product gas discharged from the exhaust port contained carbon monoxide.

Thereafter, a following process was conducted as a main experiment.

Firstly, helium gas was flown at a flow rate of 5 mL/minute for 10 minutes for gas exchange.

Next, hydrogen gas (reduction gas) was flown at a flow rate of 3 mL/minute for 4 minutes to 16 minutes or at a flow rate of 5 mL/minute for 5 minutes so as to cause the reduction reaction of the reductant (first process), thereby reducing the reductant. At this time, the gas discharged from the exhaust port contained water vapor.

Subsequently, after flowing helium gas at a flow rate of 5 mL/minute for 5 minutes for gas exchange, carbon dioxide gas was flown at a flow rate of 3 mL/minute for 4 minutes to 16 minutes or at a flow rate of 5 mL/minute for 5 minutes so as to cause a reduction reaction of carbon dioxide (second process), thereby reducing carbon dioxide gas (source gas). At this time, the product gas discharged from the exhaust port contained carbon monoxide.

Incidentally, in the processes described above, the temperature of the reductant was maintained at 800°C or 850°C while flowing either of the gas, and the processes were carried out under the atmospheric pressure conditions.

The conversion rate was obtained during a time period from when the generation amount of carbon monoxide per unit second became 0.001 mmol or more, after starting to flow carbon dioxide gas (source gas), until a value of the conversion rate became less than 0.80, where the conversion rate was calculated by a below formula from detection amounts of carbon monoxide and carbon dioxide which were calibrated with detection signal intensity obtained by belowdescribed GC/MS. An average value of the values calculated during this time period was specified as the conversion rate. Incidentally, a region where the generation amount of carbon monoxide is 0.001 mmol or less was not used for the calculation for the conversion rate.

Conversion rate = (Detection amount of carbon monoxide per unit second) j (Detection amount of carbon monoxide per unit second + Detection amount of carbon dioxide per unit second)

Moreover, an amount of carbon monoxide in a region where the conversion rate calculated by the above formula was 0.80 or more was detected by the GC/MS, and the obtained amount was defined as the generation amount of carbon monoxide.

Then, the generation amount of carbon monoxide was evaluated according to following criteria.

### [Evaluation criteria]

⊚: 0.1 mmol/g or more
∘: 0.01 mmol/g or more and less than 0.1 mmol/g
△: Less than 0.01 mmol/g

### (Analytical condition for GC/MS)

For the GC/MS analysis, "QP-2020" produced by Shimadzu Corporation was used. Conditions in a GC section were as follows.
Column temperature: 200°C
Injection temperature: 200°C
Detector temperature: 250°C
Column: EGA tube (L: 2.5 m, ϕ (inner diameter): 0.15 mm, t: 0 mm)
Column flow rate: 0.55 mL/minute
Split ratio: 400
Purge flow rate: 5.0 mL/minute

In addition, an MS section (detection section) was used in a state of being calibrated in following conditions.

That is, detection signal intensity was adjusted so that a calibration curve was able to satisfy a relation of R²>0.98, where the calibration curve was obtained by: plotting detection signal intensity obtained when flowing 1 mL, 2 mL and 3 mL of carbon dioxide using a mass flow controller which was calibrated with carbon dioxide, and had a discharge full scale of 10 mL/min or 50 mL/min, a flow rate accuracy of ±1.0% and a repeatability accuracy of ±0.2%; and approximating the plots to a straight line passing the point of origin by a least squares method. Based on the above, a detection amount with respect to the detection signal intensity of carbon dioxide was calculated.

Also, a detection amount of carbon monoxide was measured similarly by following procedures. The detection signal intensity was adjusted so that a calibration curve was able to satisfy a relation of R²>0.98, where the calibration curve was obtained by: plotting detection signal intensity obtained when flowing 1 mL, 2 mL, 3 mL and 5 mL of carbon monoxide using the mass flow controller; and approximating the plots to a straight line passing the point of origin by the least squares method. Based on the above, a detection amount with respect to the detection signal intensity of carbon monoxide was calculated.

Herein, the gas such as carbon dioxide and carbon monoxide was to be fed from a mass flow controller to the MS section via the GC section set into the above conditions, and when flowing carbon monoxide, the conversion factor was to be used to change the settings of the mass flow controller, where values of the conversion factors of carbon dioxide and carbon monoxide were 0.74 and 1.00, respectively.

The results obtained above will be shown below in Tables 1 and 2.

Incidentally, in Tables 1 and 2, the amounts of the contact gas and the generation amounts of carbon monoxide (CO generation amounts) will be represented by values per unit mass of the reductant (the oxygen carrier), respectively.

### [Table 1]

**Table 1**

| No. | Primary metallic element | | Secondary metallic element | | | | Auxiliary element | | | | | | Binder | | Reaction tempera-ture [°C] | Contact gas amount [mmol/g] | | Conversion rate | CO generations amount |
|---|---|---|---|---|---|---|---|---|---|---|---|---|---|---|---|---|---|---|---|
| | | | | | | | | | | | | | | | | H₂ | CO₂ | | |
| Example 1 | Ce | 0.7 | La | 0.3 | - | - | Fe | 0.05 | - | - | - | - | - | - | 850 | 5.20 | 5.20 | 0.967 | ○ |
| Example 2 | Ce | 0.7 | La | 0.3 | - | - | Fe | 0.1 | - | - | - | - | - | - | 850 | 5.20 | 5.20 | 0.964 | ○ |
| Example 3 | Ce | 0.8 | - | - | Gd | 0.2 | Fe | 0.1 | - | - | - | - | - | - | 850 | 5.20 | 5.20 | 0.962 | ○ |
| Example 4 | Ce | 0.8 | La | 0.2 | - | - | Fe | 0.5 | Mn | 0.5 | - | - | - | - | 850 | 5.20 | 5.20 | 0.962 | ○ |
| Example 5 | Ce | 0.7 | La | 0.3 | - | - | Fe | 0.05 | - | - | - | - | - | - | 800 | 5.20 | 5.20 | 0.962 | ○ |
| Example 6 | Ce | 0.7 | La | 0.15 | Y | 0.15 | - | - | - | - | - | - | - | - | 850 | 5.20 | 5.20 | 0.960 | ○ |
| Example 7 | Ce | 0.7 | La | 0.3 | - | - | Fe | 0.1 | - | - | - | - | - | - | 800 | 5.20 | 5.20 | 0.960 | ○ |
| Example 8 | Ce | 0.5 | La | 0.5 | - | - | - | - | - | - | - | - | - | - | 850 | 5.20 | 5.20 | 0.957 | - |
| Example 9 | Ce | 0.7 | La | 0.3 | - | - | Fe | 0.05 | - | - | - | - | - | - | 850 | 2.63 | 2.63 | 0.956 | ○ |
| Example 10 | Ce | 0.3 | La | 0.7 | - | - | - | - | - | - | - | - | - | - | 850 | 5.20 | 5.20 | 0.951 | ○ |
| Example 11 | Ce | 0.8 | La | 0.2 | - | - | - | - | - | - | - | - | - | - | 850 | 3.67 | 3.67 | 0.950 | ○ |
| Example 12 | Ce | 0.8 | - | - | Gd | 0.2 | - | - | - | - | - | - | - | - | 850 | 2.99 | 2.99 | 0.944 | ○ |
| Example 12 | Ce | 0.667 | La | 0.286 | Sm | 0.047 | Fe | 0.047 | Cu | 0.047 | - | - | - | - | 850 | 2.27 | 2.27 | 0.942 | ○ |
| Example 14 | Ce | 0.7 | - | - | Y | 0.3 | - | - | - | - | - | - | - | - | 850 | 2.40 | 2.40 | 0.939 | ○ |
| Example 15 | Ce | 0.9 | La | 0.1 | - | - | - | - | - | - | - | - | - | - | 850 | 3.03 | 3.03 | 0.933 | ○ |

### [Table 2]

**Table 2**

| No. | Primary metallic element | | Secondary metallic element | | | | Auxiliary element | | | | | | Binder | | Reaction temperature [°C ] | Contact gas amount [mmol/g] | | Conversion rate | CO generation amount |
|---|---|---|---|---|---|---|---|---|---|---|---|---|---|---|---|---|---|---|---|
| | | | | | | | | | | | | | | | | H₂ | CO₂ | | |
| Example 16 | Ce | 0.8 | - | - | Y | 0.2 | - | - | - | - | - | - | - | - | 850 | 2.39 | 2.39 | 0.929 | ○ |
| Example 17 | Ce | 0.946 | - | - | Gd | 0.054 | Fe | 0.054 | Cu | 0.054 | Zr | 0.23 | - | - | 850 | 5.20 | 5.20 | 0.928 | ○ |
| Example 18 | Ce | 0.8 | - | - | Sm | 0.2 | - | - | - | - | - | - | - | - | 850 | 2.02 | 2.02 | 0.925 | ○ |
| Example 19 | Ce | 0.8 | - | - | Pr | 0.2 | - | - | - | - | - | - | - | - | 850 | 2.05 | 2.05 | 0.924 | ○ |
| Example 20 | Ce | 0.9 | La | 0.1 | - | | Zr | 0.1 | - | - | - | - | - | - | 850 | 2.95 | 2.95 | ' 0.921 | ○ |
| Example 21 | Ce | 0.947 | La | 0.053 | - | - | Zr | 0.053 | - | - | - | - | - | - | 850 | 2.61 | 2.61 | 0.904 | ○ |
| Example 22 | Ce | 0.9 | - | - | Y | 0.1 | - | - | - | - | - | - | - | - | 850 | 2.03 | 2.03 | 0.898 | ○ |
| Example 23 | Ce | 0.95 | La | 0.05 | - | - | - | - | - | - | - | - | - | - | 850 | 2.31 | 2.31 | 0.892 | ○ |
| Example 24 | Ce | 0.7 | La | 0.3 | - | - | Fe | 0.05 | - | - | - | - | - | - | 850 | 0.66 | 0.66 | 0.867 | ○ |
| Example 25 | Ce | 0.8 | La | 0.2 | - | - | - | - | - | - | - | - | - | - | 850 | 0.92 | 0.92 | 0.857 | ○ |
| Example 26 | Ce | 0.842 | La | 0.158 | - | - | Fe+Zr | 0.263 | - | - | - | - | Ti (TiO₂) | 0.053 (2.05) | 850 | 5.2 | 5.2 | 0.937 | ○ |
| Example 27 | Ce | 0.7 | La | 0.3 | - | - | - | - | - | - | - | - | Al (Al₂O₃) | 0.05 (1.48) | 850 | 5.2 | 5.2 | 0.949 | ○ |
| Example 28 | Ce | 0.9 | La | 0.1 | - | - | Fe | 0.01 | - | - | - | - | Al (Al₂O₃) | (3.33) | 850 | 5.2 | 5.2 | 0.915 | ○ |
| Comparative Example 1 | Ce | 0.842 | - | - | - | - | Fe | 0.053 | - | - | - | - | Ti (TiO₂) | 0.158 (7.80) | 850 | 5.20 | 5.20 | 0.844 | - |
| Comparative Example 2 | Ce | 0.7 | - | - | Cs | 0.3 | Fe | 1 | - | - | - | - | - | - | 850 | 5.20 | 5.20 | 0.831 | - |
| Comparative Example 3 | w | 0.5 | La | 0.5 | - | - | Mn | 0.5 | - | - | - | - | - | - | 850 | 5.20 | 5.20 | - | △ |

Incidentally, each of the metallic elements listed in the columns of the binder was included as the oxide in the reductant. Further, as the ratio of the binder included in the reductant, the numeral out of the bracket indicates the molar ratio of the metallic element to Ce, and the numeral in the bracket indicates parts by mass of the binder per 100 parts by mass of the total mass of the reductant.

The respective reductants of Examples exhibited the higher conversion rates than those of Comparative Examples. Further, it was also found that, the conversion rate can be adjusted by changing the kind and/or the amount of the secondary metallic element and the auxiliary element.

Incidentally, the reductant obtained in Comparative Example 3 had no region where the conversion rate per unit second was 0.80 or more, which is enough for calculating the average value of the conversion rate.

### [Description of Sign]

1: Reactor
1a to 1d: Reactor
2: Reductant

## Claims

1. A reductant that reduces carbon dioxide and generates a carbon valuable substance by contact,
the reductant comprising an oxygen carrier having oxygen ion conductivity, wherein
the oxygen carrier includes: cerium (Ce) as a primary metallic element; and a metallic element belonging to a group III of a periodic table as a secondary metallic element.

2. The reductant according to claim 1, wherein
a ratio of a molar amount of the primary metallic element to a total molar amount of the metallic elements included in the oxygen carrier is 0.3 or more and 0.95 or less.

3. The reductant according to claim 1 or 2, wherein
the secondary metallic element is at least one of yttrium (Y), lanthanum (La), praseodymium (Pr), samarium (Sm) or gadolinium (Gd).

4. The reductant according to any one of claims 1 to 3, wherein
the oxygen carrier further includes an auxiliary element other than the secondary metallic element.

5. The reductant according to claim 4, wherein
a ratio of a molar amount of the auxiliary element to a total molar amount of the primary metallic element and the secondary metallic element is 0.7 or less.

6. The reductant according to claim 4 or 5, wherein
the auxiliary element is at least one of elements belonging to a fourth period or a fifth period of a periodic table.

7. The reductant according to any one of claims 4 to 6, wherein
the auxiliary element is at least one of iron (Fe), manganese (Mn), copper (Cu) or zirconium (Zr).

8. The reductant according to any one of claims 1 to 7, wherein
a ratio of a molar amount of the secondary metallic element to a molar amount of the primary metallic element is 0.01 or more and 0.99 or less.

9. The reductant according to any one of claims 1 to 8, further comprising a binder that binds the oxygen carrier.

10. The reductant according to claim 9, wherein
proportion of the binder included in the reductant is 1 part by mass or more and 60 parts by mass or less per 100 parts by mass of the reductant.

11. The reductant according to claim 9 or 10, wherein
the binder is an oxide including at least one of magnesium (Mg), titanium (Ti), zirconium (Zr), aluminum (Al) or silicon (Si).

12. The reductant according to any one of claims 1 to 11, wherein
the carbon valuable substance includes carbon monoxide.

13. The reductant according to any one of claims 1 to 12, wherein
the contact with carbon dioxide is carried out at a temperature of more than 650°C.

14. The reductant according to any one of claims 1 to 13, which is oxidized by the contact with carbon dioxide, and is subsequently reduced by contact with reduction gas including hydrogen.

15. The reductant according to claim 14, wherein
the contact with the reduction gas including hydrogen is carried out at a temperature of more than 650°C.

16. The reductant according to claim 14 or 15, wherein
an amount of the reduction gas including hydrogen that is brought in contact with the reductant is 0.01 mmol/g or more and 50 mmol/g or less per unit mass of the oxygen carrier.

17. The reductant according to any one of claims 1 to 16, wherein,
in gas after the contact of the reductant with the carbon dioxide, a ratio of an amount of the carbon valuable substance to a total amount of the carbon dioxide and the carbon valuable substance is 0.85 or more.

18. The reductant according to claim 16 or 17, wherein,
in gas after bringing the reductant, which is reduced by the contact with the reduction gas including hydrogen, in contact with the carbon dioxide, a ratio of an amount of the carbon valuable substance to a total amount of the carbon dioxide and the carbon valuable substance is 0.85 or more, and an amount of the carbon valuable substance is 0.01 mmol/g or more per unit mass of the oxygen carrier.

19. A gas production method for producing product gas that includes a carbon valuable substance by reducing carbon dioxide by bringing a reductant in contact with source gas that includes the carbon dioxide, wherein
the reductant includes an oxygen carrier having oxygen ion conductivity, and
the oxygen carrier includes: cerium (Ce) as a primary metallic element; and a metallic element belonging to a group III of a periodic table as a secondary metallic element.

20. The gas production method according to claim 19, wherein,
when bringing the reductant in contact with the source gas including carbon dioxide after bringing the reductant in contact with the reduction gas that includes hydrogen in an amount of 0.01 mmol/g or more and 50 mmol/g or less per unit mass of the oxygen carrier,
the product gas having:
a ratio of an amount of the carbon valuable substance to a total amount of the carbon dioxide and the carbon valuable substance, which is 0.85 or more; and
an amount of the carbon valuable substance, which is 0.01 mmol/g or more per unit mass of the oxygen carrier, is produced.
